# EUROPEAN PATENT SPECIFICATION

(11) **EP 3 783 239 B1**
(45) Date of publication and mention of the grant of the patent: **28.06.2023**
(21) Application number: 19788070.1
(22) Date of filing: 22.03.2019
(51) Int. Cl.: F16C 33/10, B23C 3/00, B23C 5/10, B23C 5/12

(54) **DIMPLED WORKPIECE AND DIMPLING PROCESS**
WERKSTÜCK MIT VERTIEFUNGEN UND VERTIEFUNGSVERFAHREN
PIÈCE ALVÉOLÉE ET PROCÉDÉ D'ALVÉOLAGE

(30) Priority: 18.04.2018 JP 2018079807
(43) Date of publication of application: 24.02.2021
(73) Proprietor: Kanefusa Kabushiki Kaisha, Ohguchi-cho, Niwa-gun Aichi 480-0192 (JP)
(72) Inventor: NISHIO Satoru, Niwa-gun, Aichi 480-0192 (JP); NIIMI Tatsuya, Niwa-gun, Aichi 480-0192 (JP); SATO Toshiki, Niwa-gun, Aichi 480-0192 (JP); KANDA Yasuyuki, Niwa-gun, Aichi 480-0192 (JP)
(74) Representative: Maikowski & Ninnemann Patentanwälte Partnerschaft mbB
(86) International application number: PCT/JP2019/012111
(87) International publication number: WO 2019/202911

(56) References cited:
- EP-A1- 2 375 112
- WO-A1-2010/137521
- WO-A1-2017/002326
- WO-A1-2017/199911
- WO-A1-2017/199911
- JP-A- 2003 343 741
- JP-A- 2007 211 405

## Description

### Technical Field

The present invention relates to a workpiece having a plurality of dimples on a surface and a processing method for forming the plurality of dimples on the surface of the workpiece.

### Technical Background

Dimples, in the form of a plurality of fine recesses, may be formed on a surface of a workpiece, such as aluminum, a copper alloy, a cast product thereof, a steel material, or resin, by so-called scraping. For example, a satin pattern may be formed using the plurality of the dimples on the surface of the workpiece. This is because the frictional resistance, which may be generated between a counterpart material coming in contact with the workpiece and the workpiece can be reduced by forming dimples on the workpiece. The principle is that, for example, wear debris may be generated as the workpiece comes in contact with the counterpart material, such that the wear debris may be captured between the workpiece and the counterpart material, thereby increasing the frictional resistance. An increased frictional resistance due to wear debris may be prevented by allowing the wear debris to be captured in the dimples. Alternatively, an oil may be injected between the workpiece and the counterpart material, such that the oil may fill the dimples. When the counterpart material passes near the dimples, the oil may be squeezed out from the dimples and into the space between the counterpart material and the workpiece (squeeze effect) at high pressure. This pressure may make it difficult for the counterpart material to come in contact with the workpiece. Therefore, the frictional resistance between the counterpart material and the workpiece may be reduced. Dimpled workpieces are disclosed in EP 2 375 112 A1 and WO 2017/199911 A1.

Thus, dimples may be formed on an inner wall of a tubular member, such as a cylinder for an engine, a turbocharger, etc. or joint surfaces of artificial joints. Japanese Laid-Open Patent Publication No. H10-052998 discloses a method for decorating a surface of a workpiece using a rotary cutting tool, such as a milling cutter or an end milling cutter. In this method, a cutting edge of a rotary cutting tool may be slightly abutted to the surface of the workpiece while the rotary cutting tool rotates. In this way, a plurality dimples having, for example, a circular shape or an elliptical shape can be formed in a polka dot pattern on the surface of the workpiece. The dimples are thus formed, for example, in parallel with an axial direction of the rotary cutting tool and at equal intervals in a feed direction orthogonal to the axial direction.

### Summary

### Technical Problem

When oil is filled between the workpiece and the counterpart material and the workpiece and the counterpart material move relative to each other, oil pressure and shear force are generated therebetween, thereby causing oil flow. The oil flow causes vortex-like turbulence (for example, cavitation) in the dimples, for example, when the dimples are circular. The vortex-like turbulence of the oil flow may contribute a reduction in pressure of the oil film. It is desirable to suppress generation of the turbulence of the oil flow in the dimples in order to efficiently exhibit an effect of increasing the pressure of the oil film by forming the dimples. Therefore, there has been a need for a workpiece with a plurality of dimples capable of preventing the turbulence of the oil flow in the dimples. There has also been a need for a processing method for forming such dimples in a workpiece.

### Means for solving the Problem

The proposed solution relates to a dimpled workpiece as stated in claim 1 of the accompanying claim set and a dimple processing method for forming dimples in a workpiece as stated in claim 4. One aspect of the present disclosure relates to a dimpled workpiece provided with a plurality of dimples for the purpose of increasing the pressure of an oil film. Each of the plurality of dimples has an aspect ratio of 5.0 or more and 50.0 or less, the aspect ratio being a ratio of the vertical length in the longitudinal direction to the lateral length in the lateral direction orthogonal to the longitudinal direction.

Therefore, the dimples have an elongated shape in the longitudinal direction.

According to the invention, each of the plurality of dimples has a spindle shape. In the elongated dimples having an aspect ratio of 5.0 or more, a generation of vortex-like turbulence of the oil flow may be suppressed. Further, the oil flow in the dimples will have a less turbulent flow along the longitudinal direction of the dimples. Therefore, it is possible to suppress a reduction in pressure of the oil film due to the turbulence of the oil flow in the dimples. The pressure of the oil film can thus be efficiently increased by the dimples.

According to another aspect of the present disclosure, the plurality of the dimples may include a plurality of first dimples parallel to each other, and a plurality of second dimples parallel to each other. The plurality of the first dimples and the plurality of the second dimples may be arranged so that the longitudinal direction of the plurality of the first dimples and the longitudinal direction of the plurality of the second dimples intersect at angles.

Therefore, the oil may more easily flow around the first dimples along the longitudinal direction of the first dimples. The oil may more easily flow around the second dimples along the longitudinal direction of the second dimples. The longitudinal direction of the first dimples and the longitudinal direction of the second dimples intersect at angles. Therefore, the oil flow around the first dimples and the oil flow around the second dimples may converge. Due to the convergence of oil flow, the oil captured between the workpiece and the counterpart material will less likely flow out from between these components, and the oil can therefore be held therebetween.

According to another aspect of the present disclosure, the depth of each of the plurality of dimples may be 10.0µm or less. End edges of each of the dimples in the longitudinal direction may have an inclination angle of 10° or less in the depth direction with respect to the surface of the workpiece. The plurality of dimples may thus be formed with a shallow bottom and, particularly, the end edges in the longitudinal direction may be formed to be smoothly continuous with the surface of the workpiece. Therefore, a vortex may also be prevented from being generated due to the oil flow in the dimples in the depth direction of the dimples. In addition, turbulence of the oil flow along the longitudinal direction of the dimples is less. A reduction in pressure of the oil film due to turbulence of the oil flow in the dimples may thus be more suppressed. As a result, the pressure of the oil film can be efficiently increased by the dimples.

Another aspect of the present disclosure relates to a dimple processing method for forming dimples in a workpiece using a rotary cutting tool. The rotary cutting tool, comprising a tool main body supported rotatably about an axis and a cutting edge provided on the outer circumference of the tool main body so as to project in a direction intersecting with the direction in which the axis extends, may be rotated about the axis. The rotary cutting tool may be fed along a processing surface of the workpiece while rotating, so as to form dimples on the processing surface using the cutting edge. Each dimple has an aspect ratio of 5.0 or more and 50.0 or less, the aspect ratio being a ratio of the vertical length in the longitudinal direction to the lateral length in the lateral direction orthogonal to the longitudinal direction. Each of the plurality of dimples has a spindle shape.

Therefore, a plurality of the dimples having a relatively great aspect ratio of 5.0 or more can be easily formed on the surface of the workpiece. For example, it is possible to relatively easily form a plurality of dimples arranged in parallel in the direction in which the workpiece moves relative to the counterpart material. Alternatively, it is possible to relatively easily form a plurality of dimples in which the plurality of dimples are arranged at equal intervals in another direction intersecting with the one direction.

### Brief Description of Drawings

FIG. 1 is a partial side view of a rotary cutting tool for forming spindle shaped dimples and a side view of a partial section of a workpiece.
FIG. 2 is an enlarged front view of the workpiece formed with the spindle shaped dimples.
FIG. 3 is a cross-sectional view taken along line III-III in FIG. 2.
FIG. 4 is a partial side view of a rotary cutting tool for forming ellipse shaped dimples and a side view of a partial section of a workpiece, not part of the invention.
FIG. 5 is an enlarged front view of the workpiece formed with the ellipse shaped dimples, not part of the invention.
FIG. 6 is a cross-sectional view taken along line VI-VI in FIG. 5.
FIG. 7 is a front view of a crank shaft and a cross sectional view of the rotary cutting tool for forming dimples in a crankpin of the crank shaft.
FIG. 8 is a plan view illustrating a partial sectional view of the crankpin of the crank shaft and a partial plan view of the rotary cutting tool.
FIG. 9 is an enlarged front view of the crankpin formed with the dimples, not part of the invention.
FIG. 10 is a cross-sectional view taken along line X-X in FIG. 9.
FIG. 11 is an enlarged front view of a workpiece formed with a plurality of first dimples and a plurality of second dimples, each dimples having a respective longitudinal direction intersecting at angles.
FIG. 12 is an enlarged side view of a portion XII in FIG. 7, of a rotary cutting tool for forming elliptical shaped dimples, not part of the present invention.
FIG. 13 is an enlarged side view of a rotary cutting tool having a cutting edge for forming spindle shaped dimples, according to the invention.
FIG. 14 is a perspective view of the rotary cutting tool for simultaneously forming dimples in a plurality of rows and the workpiece.
FIG. 15 is a cross-sectional view of a part of a cylindrical workpiece and the rotary cutting tool for forming dimples on the inner circumferential surface of the workpiece.
FIG. 16 is a side view of a partial section of the cylindrical workpiece and a partial section of the rotary cutting tool for forming the dimples on the inner circumferential surface of the workpiece.
FIG. 17 is an enlarged front view of the workpiece formed with the spindle shaped dimples.
FIG. 18 is a front view of a bit for forming dimples and a workpiece.
FIG. 19 is a relationship chart between load and frictional coefficient for different shapes of the dimples.
FIG. 20 is a relationship chart between aspect ratio and frictional coefficient of the dimples.
FIG. 21 is a relationship chart between speed/load and frictional coefficient.
FIG. 22 is an enlarged front view of a workpiece formed with circular dimples.
FIG. 23 is an enlarged front view of a workpiece formed with spindle shaped dimples.
FIG. 24 is an enlarged front view of a workpiece formed with a plurality of first dimples and a plurality of second dimples with their longitudinal directions intersecting at angles.
FIG. 25 is a relationship chart between load and frictional coefficient for different shapes and sizes of dimples.

### Embodiments for carrying out the Invention

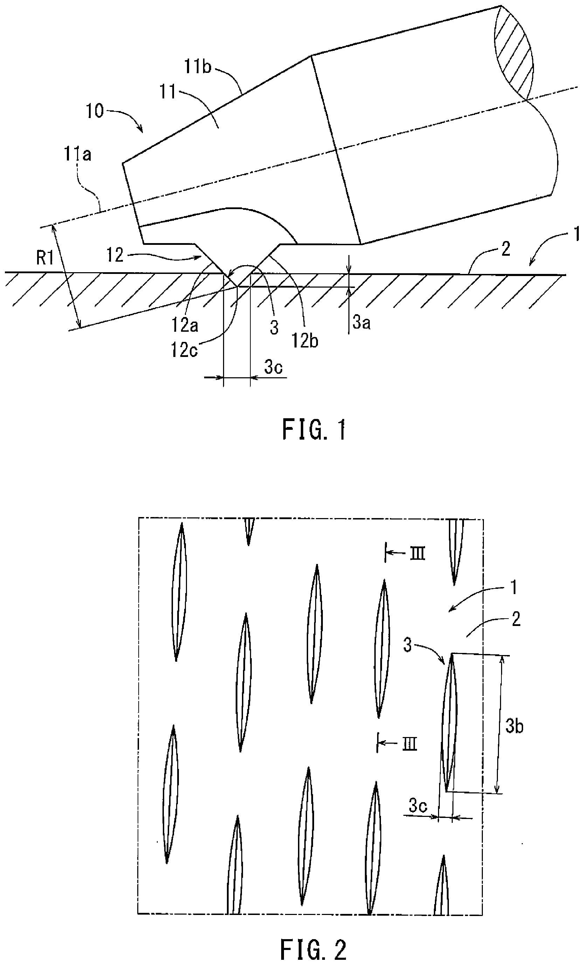

Hereinafter, one embodiment of the present invention will be described with reference to FIGS. 1 to 3. As shown in FIG. 1, a metal workpiece 1 may have a processing surface 2 configured to come in contact with a counterpart material. A plurality of dimples 3 spaced apart from each other are formed at the processing surface 2 using a rotary cutting tool 10. The workpiece 1 may be made of a steel material such as, for example, carbon steel, rolled steel for general structure, chrome molybdenum steel, stainless steel, cast iron, etc. Alternatively, the workpiece 1 may be made of, for example, a non-ferrous metal, such as, for example, aluminum, aluminum alloys, copper, or copper alloys, or a resin material. The rotary cutting tool 10 may have a tool main body 11 extending in an axis 11a direction and a cutting edge 12 projecting radially from a part of a circumference 11b of the tool main body 11. The tool main body 11 may have a columnar shape, a conical shape, or other rotatable body shape about the axis 11a. The tool main body 11 may have one or a plurality of cutting edge(s) 12. If a plurality of cutting edges 12 shall be provided, they may be arranged on the circumference 11b of the tool main body 11 at intervals in a circumferential direction and/or in an axial direction, for example, at equidistant positions on the circumference 11b in the circumferential direction and/or the axial direction.

As shown in FIG. 1, the cutting edge 12 may have a first bottom edge 12a and a second bottom edge 12b. The first bottom edge 12a may have substantially a flat surface, which is inclined by a predetermined angle with respect to the radial direction and the axial direction of the tool main body 11. The second bottom edge 12b may have substantially a flat surface, which is inclined by a predetermined angle with respect to the radial direction and the axial direction of the tool main body 11 and intersects with the first bottom edge 12a at an angle. The first bottom edge 12a and the second bottom edge 12b intersect to form a V-shaped leading end 12c. Specifically, the cutting edge 12 has substantially a triangular shaped rake face. The rake face of the cutting edge 12 is oriented in substantially the circumferential direction of the tool main body 11.

The cutting edge 12 may be formed of the same material as the tool main body 11 of the rotary cutting tool 10 or of a different material. The cutting edge 12 and the tool maim body 11 may be made of, for example, tool steel, high speed steel (high speed tool steel), or cemented carbide. Alternatively, the tool main body 11 may be made of, for example, carbon steel, stainless steel, tool steel, high speed steel, or cemented carbide, while the cutting edge 12 is formed, for example, of polycrystalline diamond (PCD), cubic boron nitride (CBN), or ceramics. The cutting edge 12 may be joined to the tool main body 11. Alternatively, the cutting edge 12 may be formed of the same or different material as that of the tool main body 11, and a corresponding area of the cutting edge 12 may be subjected to surface treatment, such as coating, etc. The surface treatment is performed, for example, by chemical vapor deposition (CVD) or physical vapor deposition (PVD). Ti-based coating layer, such as TiAlN, TiAlCrN, TiAlCrSiN coating layer, or other coating layers such as CVD diamond or diamond-like carbon (DLC), may be used as the cutting edge 12.

Referring to FIGS. 1 and 2, the process of forming dimples 3 by scraping with the rotary cutting tool 10 is illustrated. The rotary cutting tool 10 is rotatably supported about the axis 11a in a posture in which the radial direction of the tool main body 11 intersects the processing surface 2. The distance of the rotary cutting tool 10 from the processing surface 2 is set based on the maximum depth 3a of the dimple 3. The rotary cutting tool 10 is arranged at a distance from the processing surface 2 such that the maximum depth 3a is 3 to 7µm, e.g., 5µm. The rotary cutting tool 10 rotating about the axis 11a is shifted relative to the processing surface 2 in the cutting direction of the cutting edge 12. In this way, a plurality of the dimples 3 are formed in series in the longitudinal direction and spaced apart from each other.

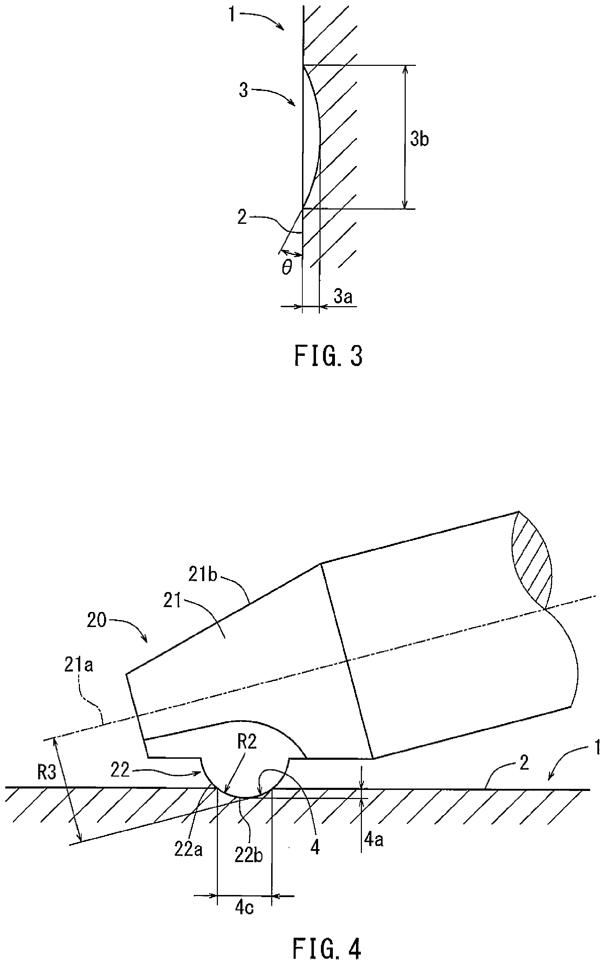

As shown in FIGS. 2 and 3, the dimples 3 formed on the processing surface 2 may have a so-called spindle shape. The maximum depth 3a of the dimple 3 may be 3 to 7µm, e.g., 5µm. The vertical length 3b of the dimple 3 in the longitudinal direction may be 0.10 to 1.00mm, for example, 0.20mm. The lateral length 3c orthogonal to the longitudinal direction of the dimple 3 may be, for example, 0.010mm. The lateral length 3c may be selected so that the aspect ratio (the ratio of the vertical length 3b to the lateral length 3c) will be 5.0 or more and 50.0 or less. The longitudinal end edges of the dimple 3 have a gentle inclination angle of 10.0° or less in the depth direction with respect to the processing surface 2. The longitudinal end edges of the dimple 3 have a triangular shape having an angle of 60.0° or less in the plan view. The plurality of dimples 3 may be spaced apart at predetermined intervals, for example, 0.30mm, in the longitudinal direction. The interval in the longitudinal direction is longer than, for example, the vertical length 3b.

As shown in FIG. 2, the plurality of the dimples 3 may be formed on the workpiece 1 to increase the pressure of the oil film. The dimple 3 has an aspect ratio of 5.0 or more and 50.0 or less between the vertical length 3b in the longitudinal direction and a lateral length 3c orthogonal to the longitudinal direction. The dimple 3 has a spindle shape elongated in the longitudinal direction.

Therefore, in the dimples 3, the generation of a vortex-like turbulence of the oil flow may be suppressed. Further, the oil flow in the dimples 3 will be a less turbulent flow along the longitudinal direction of the dimple 3. Therefore, the reduction in the oil film pressure due to the turbulence of the oil flow in the dimples 3 may be suppressed. Further, the plurality of dimples 3 are formed on the processing surface 2 so that their longitudinal directions are parallel to each other and are spaced apart from each other. The oil flow in the dimples 3 mainly corresponds to the longitudinal direction of the dimples 3. Therefore, particularly when the moving direction of the workpiece 1 relative to the counterpart material is along the longitudinal direction of the dimples 3, the oil film pressure between the workpiece 1 and the counterpart material is effectively increased. The dimples 3 thus allow the pressure of the oil film to effectively increase between the workpiece 1 and the counterpart material.

As shown in FIGS. 1 and 3, the dimple 3 may have a maximum depth 3a of 10µm or less. The longitudinal end edges of the dimple 3 may have an inclination angle θ of 10.0° or less in the depth direction with respect to the processing surface 2. Therefore, the dimple 3 is formed to have a shallow bottom, and in particular, the longitudinal end edges are smoothly continuous with the processed surface 2. Therefore, also in the depth direction of the dimple 3, generation of a vortex due to the oil flow in the dimple 3 is suppressed. Moreover, the oil flow is less disturbed along the longitudinal direction of the dimple 3. Therefore, a reduction in the oil film pressure due to the turbulence of the oil flow in the dimple 3 is further suppressed. As a result, the pressure of the oil film can be efficiently increased by the dimples 3.

Referring to FIGS. 1 and 2, when forming dimples 3 on the processing surface 2, the rotary cutting tool 10 having the tool main body 11 rotatably supported about the axis 11a and the cutting edge 12 provided on the circumference 11b of the tool main body 11 is rotated about the axis 11a. The rotary cutting tool 10 is fed along the processing surface 2 while rotating so as to form dimples 3 on the processing surface 2 utilizing the cutting edge 12. The dimple 3 has an aspect ratio of 5.0 or more and 50.0 or less, the aspect ratio being a ratio of the vertical length 3b in the longitudinal direction to the lateral length 3c in the lateral direction orthogonal to the longitudinal direction. Therefore, a plurality of dimples 3 having a relatively larger aspect ratio of 5.0 or more can be easily formed in the processing surface 2. For example, it is possible to relatively easily form a plurality of dimples 3 arranged in parallel in the direction in which the workpiece 1 will move relative to the counterpart material.

Hereinafter, another example, not part of the invention will be described with reference to FIGS. 4 to 6. In this embodiment, dimples 4 are formed using a rotary cutting tool 20 shown in FIG. 4, alternative to the rotary cutting tool 10 shown in FIG. 1. The rotary cutting tool 20 includes a cutting edge 22 shown in FIG. 4, alternative to the cutting edge 12 shown in FIG. 1. The cutting edge 22 includes a bottom edge 22a.

As shown in FIG. 4, the bottom edge 22a is formed to have a circular arc shape projecting in the radial direction of the tool main body 21. The location where the bottom edge 22a protrudes the most in the radial direction of the rotary cutting tool 20 is the leading end 22b of the cutting edge 22. The radius of curvature R2 of the bottom edge 22a may be 0.40mm or more, for example, 0.50mm. The maximum of R2 is, for example, 2mm. The length R3 from the axis 21a to the leading end 22b is 10.0mm or more, for example 12.5mm. The maximum of R3 may be, for example, 30mm. The ratio between the length R3 and the radius of curvature R2 is set to be 25.0 times or more. The rake face of the cutting edge 22 is substantially semicircular and generally oriented in the circumferential direction of the tool main body 21.

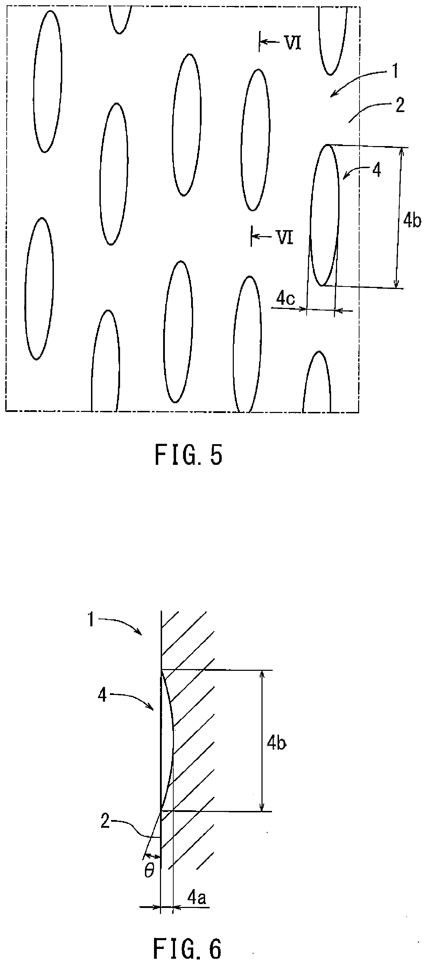

As shown in FIGS. 5 and 6, the dimple 4 formed on the processing surface 2 by the rotary cutting tool 20 has an elliptical shape. The maximum depth 4a of the dimple 4 may be 3 to 7µm, e.g., 5µm. The vertical length 4b of the dimple 4 in the longitudinal direction may be in the range of 0.10 to 1.00mm, for example 0.20mm. The lateral length 4c orthogonal to the longitudinal direction of the dimple 4 may be, for example, 0.010mm, so that the aspect ratio (the ratio of the vertical length 4b to the lateral length 4c) may be between 5.0 or more and 50.0 or less. The longitudinal end edges of the dimple 4 have a gentle inclination angle θ of 10.0° or less in the depth direction with respect to the processing surface 2. Each of the plurality of dimples 4 are arranged in the longitudinal direction and are arranged at predetermined intervals. The interval in the longitudinal direction of the plurality of dimples 4 may be, for example, 0.30mm, and is longer than the vertical length 4b.

As shown in FIG. 5, a plurality of dimples 4 are formed on the workpiece 1 in order to increase the pressure of the oil film. The dimple 4 has an aspect ratio of 5.0 or more and 50.0 or less, the aspect ratio being the ratio of a vertical length 4b in the longitudinal direction to a lateral length 4c in a direction orthogonal to the longitudinal direction. The dimple 4 has an elliptical shape elongated in the longitudinal direction. Therefore, the dimples 4 may exhibit a similar effect as the dimples 3. For example, vortex-like turbulence can be prevented from being generating in the oil flow in the dimples 4.

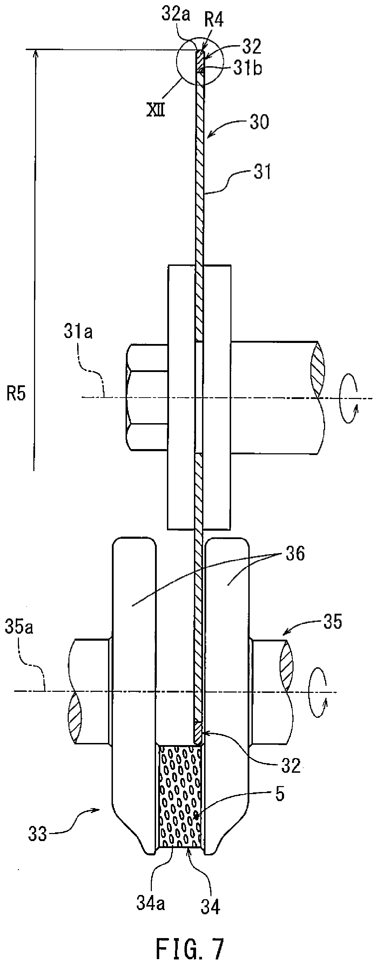

Hereinafter, another example, not part of the invention, will be described with reference to FIGS. 7 to 10 and 12. In this example, the rotary cutting tool 30 shown in FIG. 7 is used, alternative to the rotary cutting tool 10 shown in FIG. 1. In this example, the dimples are formed on a circumferential surface of a columnar shaped member. For example, a plurality of ellipse shaped dimples 5 are formed on a circumferential surface 34a of the crankpin 34 of the crank shaft 33.

As shown in FIG. 7, 8, 12, the rotary cutting tool 30 includes a disc-shaped tool main body 31 centering on an axis 31a and a plurality of cutting edges projecting radially outward from the circumference 31b of the tool main body 31. The cutting edge 32 has a circular arc-shaped bottom edge 32a that projects radially from a part of the outer periphery of the tool body 31. The tool body 31 may have a diameter of, for example, 320.0 mm and a thickness of 4.0 mm. The circular arc shape of the bottom edge 32a may have, for example, a fan shape having an angle range of 160° in the thickness direction. The circular arc shaped radius of curvature R4 of the bottom edge 32a may be, for example, 23.5 mm.

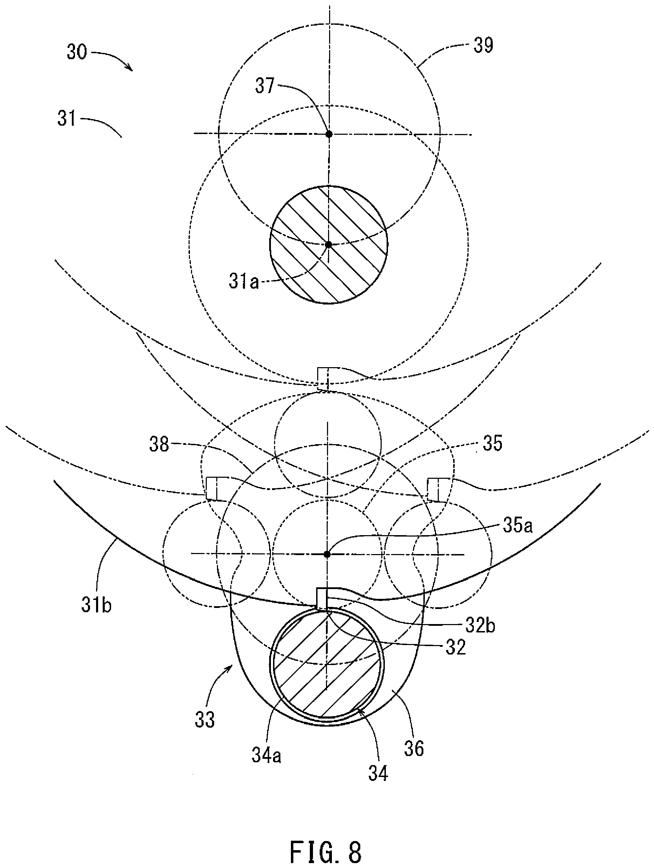

As shown in FIGS. 7 and 8, the ratio of the radius R5 of the tool main body 21 to the radius of curvature R4 is 25.0 or more. The tool main body 31 has one or a plurality of cutting edges 32. If a plurality of cutting edges 32 shall be provided, they may be arranged on the circumference 31b of the tool main body 31 at intervals, for example, at equidistant positions on the circumference 31b. The rake face 32b of the cutting edge 32 is oriented in substantially the circumferential direction of the tool main body 31.

Referring to FIGS. 7 and 8, the process of forming dimples 5 using the rotary cutting tool 30 is illustrated. The crankshaft 33 includes a crank journal 35, a crankpin 34, and a crank arm 36. The crankpin 34 has a columnar shape having an axis center parallel to the axis 35a of the crank journal 35. The pair of crank arms 36 extend radially from the crank journal 35, and the crankpin 34 is located at the leading end thereof. As a result, the axis of the crankpin 34 is spaced apart from the axis 35a of the crank journal 35 in the radial direction. The crankshaft 33 is supported so as to be rotatable about an axis 35a. As the crankshaft 33 rotates, the axis of the crankpin 34 moves on a circular track 38.

Referring to FIGS. 7 and 8, the rotary cutting tool 30 is rotatably supported about the axis 31a parallel to the axis 35a of the crank shaft 33. The rotary cutting tool 30 is supported such that the axis 35a moves on the circular track 39 about the tool revolving shaft 37. The crankpin 34 revolves about the axis 35a when the crank shaft 33 rotates about the axis 35a. The rotary cutting tool 30 revolves about the tool revolving shaft 37 on the circular track 39 so as to be synchronized to be similarly parallel to the revolving of the crankpin 34.

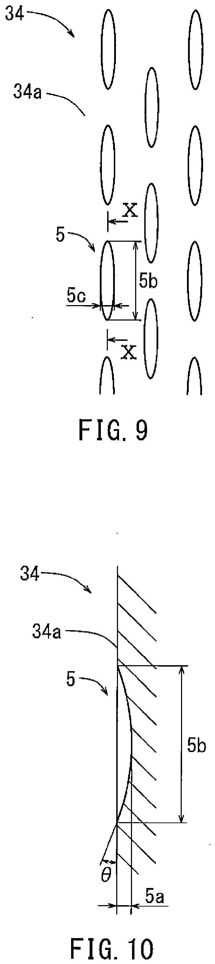

Referring to FIGS. 7 and 8, the distance of the rotary cutting tool 30 from the circumferential surface 34a may be set based on the maximum depth 5a of the dimple 5 (see FIG. 10). The distance of the rotary cutting tool 30 from the circumferential surface 34a may be set so as to have the maximum depth 5a of 3 to 7µm, e.g., 5µm. During cutting, the axis 31a of the rotary cutting tool 30 rotates about the axis 31a and moves on the circular track 39 in accordance with the crankpin 34, which moves on the circular track 38. Further, the rotary cutting tool 30 moves relative to the circumferential surface 34a in an extending direction of the axis 31a. Thereby, a plurality of the dimples 5 are formed so as to be longitudinally lined up in the circumferential direction of the circumferential surface 34a and spaced apart from each other in the circumferential direction and the axial direction of the circumferential surface 34a.

In examples not part of the invention, shown in FIGS. 9 and 10, the dimples 5 formed on the circumferential surface 34a have an elliptical shape. The maximum depth 5a of the dimple 5 may be 3 to 7µm, e.g., 5µm. The vertical length 5b in the longitudinal direction of the dimple 5 may be, for example, 0.970mm. The lateral length 5c of the dimple 5 orthogonal to the longitudinal direction may be, for example, 0.0569mm, so that the dimple 5 may have an aspect ratio (a ratio of the vertical length 5b to the lateral length 5c) of 5.0 or more and 50.0 or less. The longitudinal end edges of the dimple 5 have a gentle inclination angle θ of 10.0° or less with respect to the circumferential surface 34a in the depth direction. The longitudinal intervals between the plurality of the dimples 5 may be, for example, 1.50mm, which is longer than or substantially the same as the vertical length 5b.

As shown in FIG. 9, the plurality of the dimples 5 are formed on the circumferential surface 34a of the crankpin 34 to increase the pressure of the oil film. The dimples 5 have an aspect ratio of 5.0 or more and 50.0 or less, the aspect ratio being a ratio of the vertical length 5b in the longitudinal direction to the lateral length 5c in a direction orthogonal to the longitudinal direction. The dimples 5 have an elliptical shape elongated in the longitudinal direction. Therefore, the dimples 5 may exhibit the same effect as the dimples 3. For example, vortex-like turbulence may be prevented from being generated in the oil flow in the dimples 5. The oil flow in the dimples 5 mainly corresponds to the longitudinal direction of the dimples 5. The pressure of the oil film between the crankpin 34 and the connecting rod can thus be efficiently increased, especially since the longitudinal direction of the dimples 5 extends along the relative moving direction of the crankpin 34 (in the circumferential direction of the circumferential surface 34a) to the connecting rod.

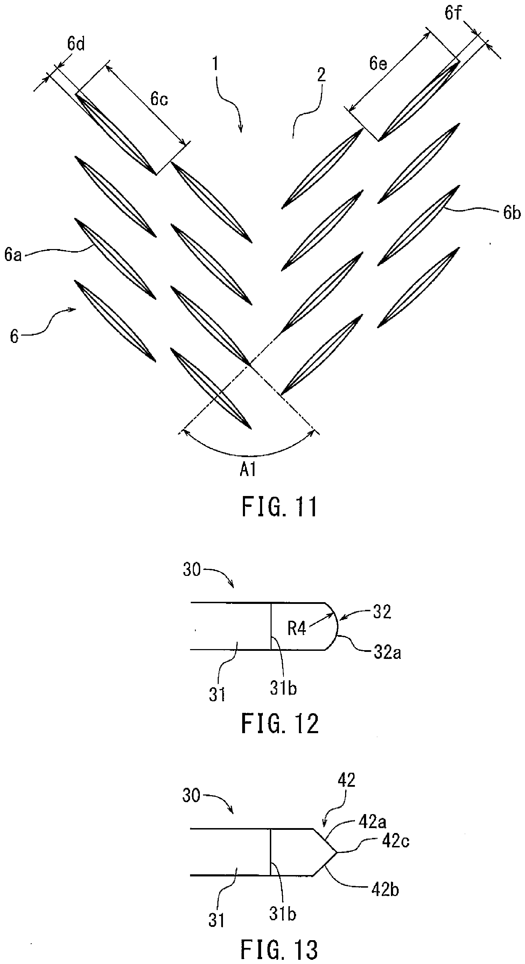

Hereinafter, another embodiment will be described with reference to FIG. 13. In this embodiment, a cutting edge 42 shown in FIG. 13 is provided on the circumference 31b of the tool main body 31, alternative to the cutting edge 32 shown in FIG. 12. As shown in FIG. 13, the cutting edge 42 may have a first bottom edge 42a and a second bottom edge 42b. The first bottom edge 42a may have substantially a flat surface, which is inclined by a predetermined angle with respect to the radial direction and the axial direction of the tool main body 31. The second bottom edge 42b may have substantially a flat surface, which is inclined by a predetermined angle with respect to the radial direction and the axial direction of the tool main body 31 and intersects with the first bottom edge 42a at a predetermined angle. The first bottom edge 42a and the second bottom edge 42b intersect to form a V-shaped leading end 42c. Specifically, the cutting edge 42 has substantially a triangular shaped rake face. The rake face of the cutting edge 42 is oriented in substantially the circumferential direction of the tool main body 31. The cutting edge 42 has a flank on the opposite side of the rake face.

The spindle shaped dimples, as shown in FIGS. 2 and 3, are formed on the circumferential surface 34a of the crankpin 34 of the crank shaft 33 shown in FIG. 7 using the cutting edge 42 shown in FIG. 13. The maximum depth of the dimples formed on the circumferential surface 34a shown in FIG. 7 may be 3 to 7µm, e.g., 5µm. The vertical length of the dimples in the longitudinal direction may be, for example, 0.970mm. The lateral length orthogonal to the longitudinal direction of the dimples may be, for example, 0.020mm, so that the dimples may have an aspect ratio (a ratio of the vertical length to the lateral length) of 5.0 or more and 50.0 or less. The longitudinal end edges of the dimples have a gentle inclination angle of 10.0° or less with respect to the circumferential surface 34a in the depth direction. The intervals in the longitudinal direction of the plurality of the dimples may be, for example, 1.50mm, which is longer than or substantially the same as the vertical length.

The spindle shaped dimples are formed on the circumferential surface 34a of the crankpin 34 of the crank shaft 33 shown in FIG. 7 using the cutting edge 42 shown in FIG. 13. The aspect ratio of the vertical length in the longitudinal direction to the lateral length orthogonal to the longitudinal direction is 5.0 or more and 50.0 or less. The dimples 4 have a spindle shape elongated in the longitudinal direction. Therefore, the dimples formed by the cutting edge 42 exhibit the same effect as the dimples 5. The pressure of the oil film between the crankpin 34 and the connecting rod can thus be efficiently increased, especially since the longitudinal direction of the dimples extends along the relative moving direction (in the circumferential direction of the circumferential surface 34a) of the crankpin 34 to the counterpart material (connecting rod).

Hereinafter, another embodiment will be described with reference to FIG. 11. In this embodiment, the dimples 6 shown in FIG. 11 are formed on the processing surface 2 of the workpiece 1, alternative to the dimples 3 shown in FIG. 1. The dimples 6 may be formed, for example, using the rotary cutting tool 10 shown in FIG. 1 or the rotary cutting tool 20 shown in FIG. 4. The dimples 6 include a plurality of first dimples 6a and a plurality of second dimples 6b. As shown in FIG. 11, the first dimples 6a and the second dimples 6b have a spindle shape. Alternatively, in an example not part of the invention, the first dimples 6a and the second dimples 6b may have an elliptical shape. The regions where the first dimples 6a and the second dimples 6b are formed do not substantially overlap each other.

As shown in FIG. 11, the maximum depth of the first dimples 6a and the second dimples 6b may be 3 to 7µm, e.g., 5µm. The vertical length 6c of the first dimple 6a in the longitudinal direction and the vertical length 6e of the second dimple 6b in the longitudinal direction may be 0.10 to 1.00mm, for example, 0.20mm. The lateral length 6d orthogonal to the longitudinal direction of the first dimple 6a and the lateral length 6f of the second dimple 6b may be, for example, 0.010mm, so that the dimples 6 have an aspect ratio (a ratio of the vertical lengths 6c, 6e to the lateral lengths 6d, 6f) that is 5.0 or more and 50.0 or less. The longitudinal end edges of the first dimples 6a and the second dimples 6b have a gentle inclination angle of 10.0° or less in the depth direction with respect to the processing surface 2.

As shown in FIG. 11, the longitudinal directions of the plurality of the first dimples 6a are parallel to each other. The longitudinal directions of the plurality of the second dimples 6b are parallel to each other. The first dimples 6a and the second dimples 6b may be arranged so that their longitudinal directions intersect with each other at an angle A1. The angle A1 may be, for example, 90°. One first dimple 6a is spaced apart from an adjacent first dimple 6a. One second dimple 6b is spaced apart from an adjacent second dimple 6b.

As shown in FIG. 11, the plurality of the dimples 6 are formed on the workpiece 1 to increase the pressure of the oil film. The plurality of the dimples 6 includes the plurality of the first dimples 6a and the plurality of the second dimples 6b. The first dimples 6a have an aspect ratio between 5.0 or more and 50.0 or less, the aspect ratio being a ratio of the vertical length 6c in the longitudinal direction to the lateral length 6d in a direction orthogonal to the longitudinal direction. The second dimples 6b have an aspect ratio between 5.0 or more and 50.0 or less, the aspect ratio being a ratio of the vertical length 6e in the longitudinal direction to the lateral length 6f in a direction orthogonal to the longitudinal direction. The dimples 6 have a spindle shape or an elliptical shape (in an example not part of the invention) elongated in the longitudinal direction. Therefore, vortex-like turbulence may be prevented from being generated in the oil flow in the dimples 6. Further, the oil flow in the dimples 6 will be a less turbulent flow along the longitudinal direction of the dimple 6. Therefore, a reduction in the oil film pressure due to the turbulence of the oil flow in the dimples 6 may be suppressed.

As shown in FIG. 11, the dimples 6 include the plurality of first dimples 6a parallel to each other and the plurality of second dimples 6b parallel to each other. The plurality of first dimples 6a and the plurality of second dimples 6b may be arranged so that the longitudinal direction of the plurality of first dimples 6a and the longitudinal direction of plurality of the second dimples 6b intersect at angles. Therefore, the oil may more easily flow around the first dimples 6a along the longitudinal direction of the first dimples 6a. The oil may more easily flow around the second dimples 6b along the longitudinal direction of the second dimples 6b. Therefore, the oil flow around the first dimples 6a and the flow around the second dimples 6b may converge. Due to the convergence of the oil flow, the oil captured between the workpiece 1 and the counterpart material will hardly flow out from between these components, and the oil can be held therebetween. The pressure at the converged parts is increased more than the case of using a single dimple direction.

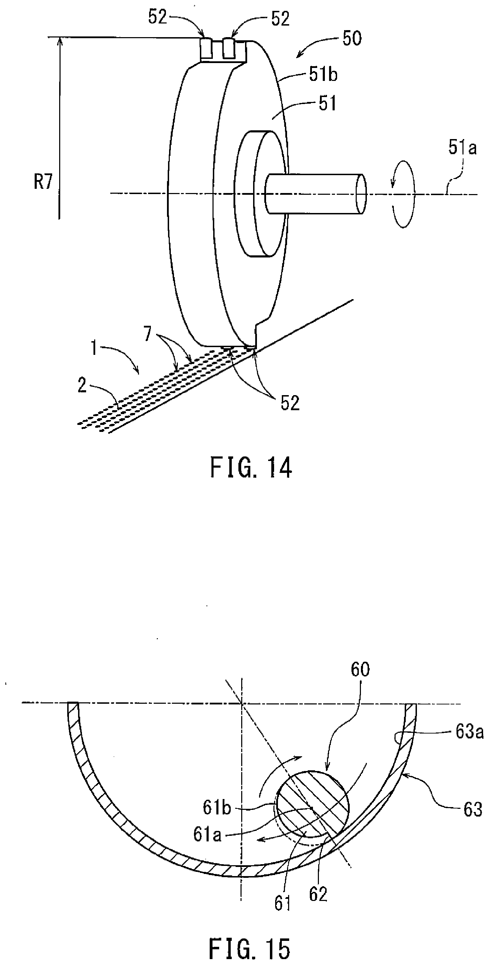

Hereinafter, another embodiment will be described with reference to FIG. 14. In this embodiment, a rotary cutting tool 50 shown in FIG. 14 is used, alternative to the rotary cutting tool 30 shown in FIG. 7. Dimples 7 are formed on the processing surface 2 of the workpiece 1 using the rotary cutting tool 50. The rotary cutting tool 50 includes a columnar tool main body 51 along an axis 51a and a plurality of cutting edges 52 projecting radially from a part of the circumference 51b of the tool main body 51. The plurality of the cutting edges 52 are arranged so as to be spaced apart in the direction of the axis 51a of the tool body 51 and around the circumference 51b in the circumferential direction. For example, the plurality of cutting edges 52 are arranged at intervals in the axis 51a direction by a length substantially equal to the length of the cutting edge 52 in the axis 51a direction. Further, the plurality of the cutting edges 52 are spaced apart from each other, for example, by 180° in the circumferential direction.

The cutting edges 52 shown in FIG. 14 may have, for example, a shape similar to the cutting edge 32 shown in FIG. 12 or a shape similar to the cutting edge 42 shown in FIG. 13. The distance of the rotary cutting tool 50 from the processing surface 2 is set such that the maximum depths of the dimples 7 may be 3 to 7µm, e.g., 5µm. The rotary cutting tool 50 rotating about the axis 51a is moved relative to the processing surface 2 in the cutting direction of the cutting edges 52. This allows the plurality of the dimples 7 on the processing surface 2 to be arranged parallel to each other in the longitudinal direction and spaced apart from each other. The dimples 7 formed by the cutting edges 52 may have, for example, an elliptical shape (not part of the invention) or a spindle shape.

As shown in FIG. 14, the maximum depths of the dimples 7 may be 8 to 12µm, e.g., 10µm. The vertical lengths of the dimples 7 in the longitudinal direction may be, for example, 4.0mm. The lateral length of the dimples 7 orthogonal to the longitudinal directions may be, for example, 0.50mm, so that the dimples 7 have an aspect ratio (a ratio of the vertical length to the lateral length) of 5.0 or more and 50.0 or less. The longitudinal end edges of the dimples 7 may have a gentle inclination angle of 10.0° or less in the depth direction with respect to the processing surface 2.

As shown in FIG. 14, the plurality of the dimples 7 are formed on the workpiece 1 to increase the pressure of the oil film. The dimples 7 have an aspect ratio between 5.0 or more and 50.0 or less, that aspect ratio being a ratio of the vertical length in the longitudinal direction to the lateral length in a direction orthogonal to the longitudinal direction. The dimples 7 have a spindle shape or an elliptical shape (not part of the invention) elongated in the longitudinal direction and are arranged parallel to each other in the longitudinal direction. Therefore, the dimples 7 may exhibit a similar effect as the dimples 3. For example, vortex-like turbulence may be prevented from being generated in the oil flow in the dimples 6. The rotary cutting tool 50 can simultaneously form a plurality of rows of dimples 7 spaced apart from each other in the direction of the axis 51a.

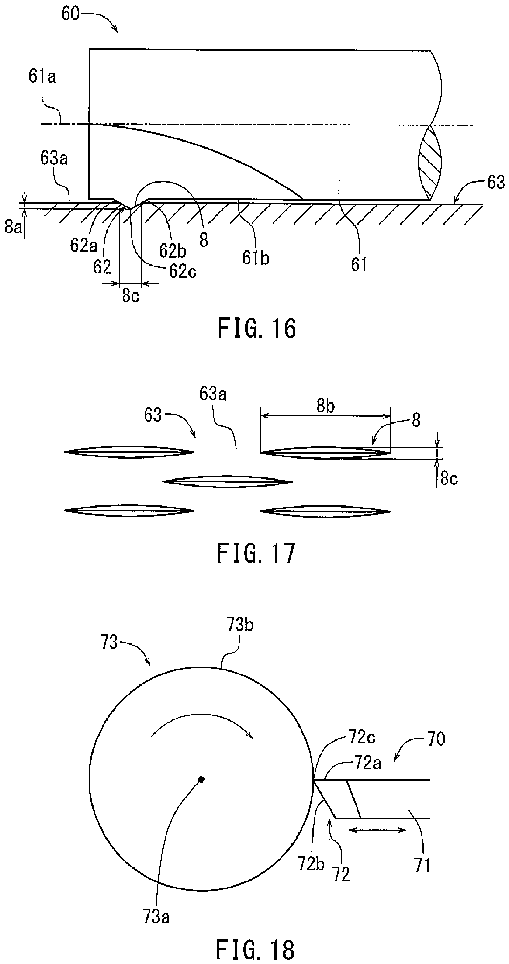

Hereinafter, another embodiment will be described with reference to FIGS. 15 to 17. In this embodiment, a rotary cutting tool 60 shown in FIGS. 15 and 16 is used, alternative to the rotary cutting tool 10 shown in FIG. 1. The dimples 8 are formed on an inner circumferential surface 63a of a cylindrical workpiece 63 using the rotary cutting tools 60. The rotary cutting tool 60 has a tool main body 61 about an axis 61a, and one or a plurality of cutting edge(s) 62 projecting radially from a part of a circumference 61b of the tool main body 61. If a plurality of the cutting edges 62 shall be provided, they may be arranged on the circumference 61b of the tool main body 61 at intervals in a circumferential direction, for example, at equidistant positions on the circumference 61b in the circumferential direction. Alternatively or in addition, they may be arranged at predetermined intervals in the axial direction.

As shown in FIG. 16, the cutting edge 62 may have a first bottom edge 62a and a second bottom edge 62b. The first bottom edge 62a is an edge having substantially a flat end, which is inclined by a predetermined angle with respect to the radial direction and the axial direction of the tool main body 61. The second bottom edge 62b is an edge, which is inclined by a predetermined angle with respect to the radial direction and the axial direction of the tool main body 61 and intersects with the first bottom edge 62a by a predetermined angle. The first bottom edge 62a and the second bottom edge 62b intersect to form a V-shaped leading end 62c. Specifically, the cutting edge 62 has substantially a triangular shaped rake face. The rake face of the cutting edge 62 is oriented in substantially the circumferential direction of the tool main body 61.

As shown in FIGS. 15 and 16, the rotary cutting tool 60 is rotated about the axis 61a while moving along the inner circumferential surface 63a. Thereby, the cutting edges 62 cut the inner circumferential surface 63a to form a plurality of the spindle shaped dimples 8. The dimples 8 are spaced apart from each other along the circumferential direction of the inner circumferential surface 63a. The longitudinal direction of the dimple 8 is the same direction as the circumferential direction of the inner circumferential surface 63a. Further, the dimples 8 are arranged so as to be spaced apart from and parallel to each other in the axial direction of the workpiece 63. This is accomplished by moving the rotary cutting tool 60 in the direction of the axis 61a.

As shown in FIGS. 16 and 17, the maximum depth 8a of the dimple 8 may be 3 to 7µm, e.g., 5µm. The vertical length 8b of the dimple 8 in the longitudinal direction may be, for example, 0.557mm. The lateral length 8c of the dimple 8 orthogonal to the longitudinal direction may be, for example, 0.020mm, so that the dimple 8 may have an aspect ratio (a ratio of the vertical length 8b to the lateral length 8c) of 5.0 or more and 50.0 or less. The longitudinal end edges of the dimples 8 have a gentle inclination angle of 10.0° or less in the depth direction with respect to the inner circumferential surface 63a. When the rotary cutting tool 60 has, for example, a circular arc shaped cutting edge as shown in FIG. 4, alternative to the cutting edge 62, ellipse shaped dimples (not part of the invention) may be formed on the inner circumferential surface 63a, similar to the dimples 8.

As shown in FIGS. 15 to 17, the plurality of dimples 8 are formed on the workpiece 1 in order to increase the pressure of the oil film. The dimples 8 may have an aspect ratio of 5.0 or more and 50.0 or less, the aspect ratio being a ratio of the vertical length 8b in the longitudinal direction to the lateral length 8c in a direction orthogonal to the longitudinal direction. The dimples 8 may have an elliptical shape (in an example not part of the invention) or a spindle shape elongated in the longitudinal direction and may be arranged parallel to each other in the longitudinal direction. Therefore, the dimples 8 may exhibit a similar effect as the dimples 3. For example, vortex-like turbulence can be prevented from being generated in the oil flow in the dimples 8.

Hereinafter, another embodiment will be described with reference to FIG. 18. In this embodiment, dimples are formed on a processing surface 73b of a workpiece 73 having substantially a columnar shape, a conical shape, or other rotatable body shape using a bit 70 shown in FIG. 18, alternative to the rotary cutting tool 10 shown in FIG. 1. The bit 70 includes a rod-like tool main body 71 and a cutting edge 72 provided on the leading end of the tool main body 71. The cutting edge 72 has a rake face 72a and a flank 72b.

As shown in FIG. 18, the workpiece 73 is rotatably supported about the axis 73a. The processing surface 73b is cut by abutting the leading end 72c of the cutting edge 72 to the processing surface 73b of the workpiece 73 rotating about the axis 73a. The leading end 72c of the cutting edge 72 is repeatedly abutted to and moved away from the processing surface 73b as the bit 70 reciprocally moves in the radial direction of the workpiece 73. As a result, the plurality of the dimples can be formed on the processing surface 73b by the cutting edges 72. The plurality of the dimples are arranged so that the longitudinal direction is arranged along the circumferential direction of the processing surface 73b and are spaced away from each other. The bit 70 moves relative to the workpiece 73 in a direction toward the axis 73a. This allows the plurality dimples to be arranged parallel to the axis 73a direction and spaced apart from each other.

The maximum depth of the dimples formed on the processing surface 73b shown in FIG. 18 may be 3 to 7µm, e.g., 5µm. The vertical length of the dimple in the longitudinal direction may be 0.10 to 1.00mm, e.g., 0.20mm. The lateral length orthogonal to the longitudinal direction of the dimple may be, for example, 0.010mm, so that the dimples have an aspect ratio (a ratio of the vertical length to the lateral length) of 5.0 or more and 50.0 or less. The longitudinal end edges of the dimples have a gentle inclination angle of 10.0° or less in the depth direction with respect to the processing surface 2.

As shown in FIG. 18, the plurality of the dimples are formed on the processing surface 73b of the workpiece 73 in order to increase the pressure of the oil film. Each dimple has an aspect ratio of 5.0 or more and 50.0 or less, the aspect ratio being a ratio of the vertical length in the longitudinal direction to the lateral length orthogonal to the longitudinal direction. The dimples are arranged so as to be spaced away from and parallel to each other in the longitudinal direction. Therefore, the dimples formed on the processing surface 73b exhibit a similar effect as the dimples 3. For example, vortex-like turbulence may be prevented from being generated in the oil flow in the dimples.

Hereinafter, the experiments and their results as a basis for defining the dimple shape will be presented. As one of the experiments, frictional characteristics of the processing surface of the workpiece were evaluated by a three ball-on-disc type friction test apparatus. The workpiece used was a disc-shaped aluminum alloy for casting (AC8A-T6) having an outer diameter of 44mm, an inner diameter of 20mm, and a thickness of 8mm. A chrome bearing steel (SUJ2) ball having a diameter of 6.35mm was used as a friction counterpart material. The counterpart material was polished so that the contact surface with the workpiece had a diameter of 2.5mm, and was mirror-finished so that the surface roughness (arithmetic mean roughness) of the contact surface was 0.01µm or less.

The three counterpart materials were placed at respective trisection positions in the circumferential direction at a position 17mm from the center of the workpiece. A poly-α-olefin-based synthetic lubricating oil (PAO) of 10cst at 40 °C was applied on the contact surface between the workpiece and the counterpart material. A load was applied to the three counterpart materials from a side opposite to the contact surface. The total load applied to the three counterpart materials was increased from 50N to 450N in 25N increments. The workpiece was rotated about the axis center so that the sliding speed was 2.0 m/sec, while the load was applied to the counterpart material. The coefficient of friction between the workpiece and the counterpart material was obtained by calculating using the load applied to the counterpart material and the torque required to rotate the workpiece.

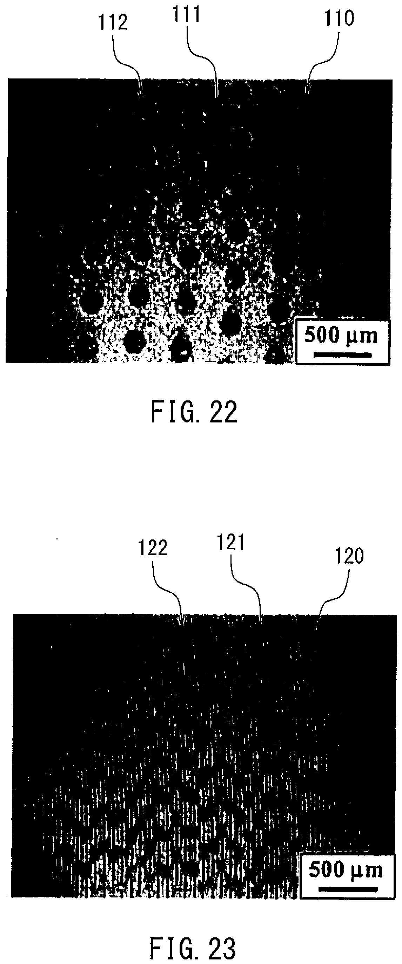

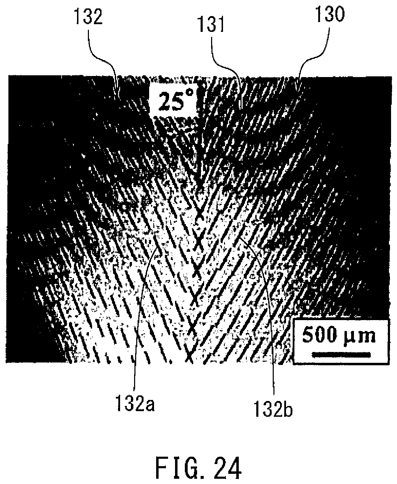

The following test pieces were prepared. The test piece 100 was a workpiece on which no dimple was formed. A test piece 110, which is shown in FIG. 22, was a workpiece on which circular dimples 112 were formed on a processing surface 111. A test piece 120, which is shown in FIG. 23, was a workpiece on which spindle-shaped dimples 122 were formed on a processing surface 121. A test piece 130 shown in FIG. 24, was a workpiece on which spindle-shaped dimples 132 were formed on a processing surface 131. The dimples 132 had a plurality of first dimples 132a arranged in parallel and a plurality of second dimples 132b arranged in parallel. The first dimples 132a and the second dimples 132b were arranged so that their longitudinal directions intersected each other at an angle of about 25°. The dimples 132 were arranged such that the moving direction of the counterpart material with respect to the test piece 130 corresponded to a direction in which the first dimples 132a and the second dimples 132b intersect and converge. For example, in FIG. 24, the direction from top to bottom was the moving direction of the counterpart material relative to the test piece 130. The number of dimples and the intervals of each of the test pieces 110, 120, 130 were set so that the area ratio occupied by the dimples on the sliding surface was equal to 15%.

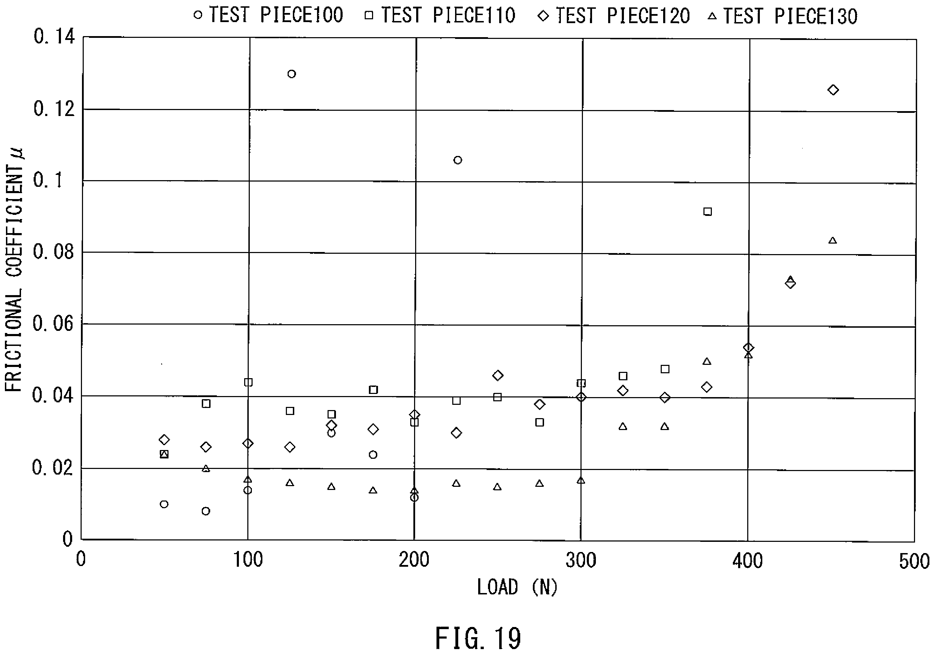

As shown in FIG. 19, in the case of the test piece 100 in which no dimples were formed, the frictional coefficient changed from about 0.01 to about 0.13. Seizure occurred when the load reached 125N. In the case of the test piece 110, the frictional coefficient was larger than that of the test piece 100. This occurred at a low load, 200N or less. However, the change in the frictional coefficient accompanied by the increase in load was gradual, about 0.03 to 0.05, until the load resistance was 375N. It is believed that the frictional coefficient stabilized in the test piece 110 because the dimples 112 served as spots where wear debris or oil could accumulate. It is believed that the frictional coefficient increased at low load because turbulence of the oil flow in the dimples 112 was generated and the pressure of the oil film decreased.

As shown in FIG. 19, in the case of the test piece 120, the load resistance was increased to 450 N. The frictionalal coefficient under the same load was reduced, by about 0.01 to 0.04 , as compared to the case of the test piece 110. In the case of the test piece 130, the friction coefficient was reduced, by about 0.02, as compared to the test piece 120, particularly at a low load of 100 to 300N. This reduction may be caused by an increase in thickness of the oil film, since the dimples 132a and the dimples 132b were arranged with their longitudinal directions intersecting each other, so as to enhance the convergence of the oil. As a result, the contact frequency between the test piece 130 and the ball decreased. The frictional coefficient increased to more than that of the test piece 100 when the moving direction of the counterpart material with respect to the test piece 130 was reversed. That is, the moving direction of the counterpart material with respect to the test piece 130 was directed from the bottom to the top of FIG. 24.

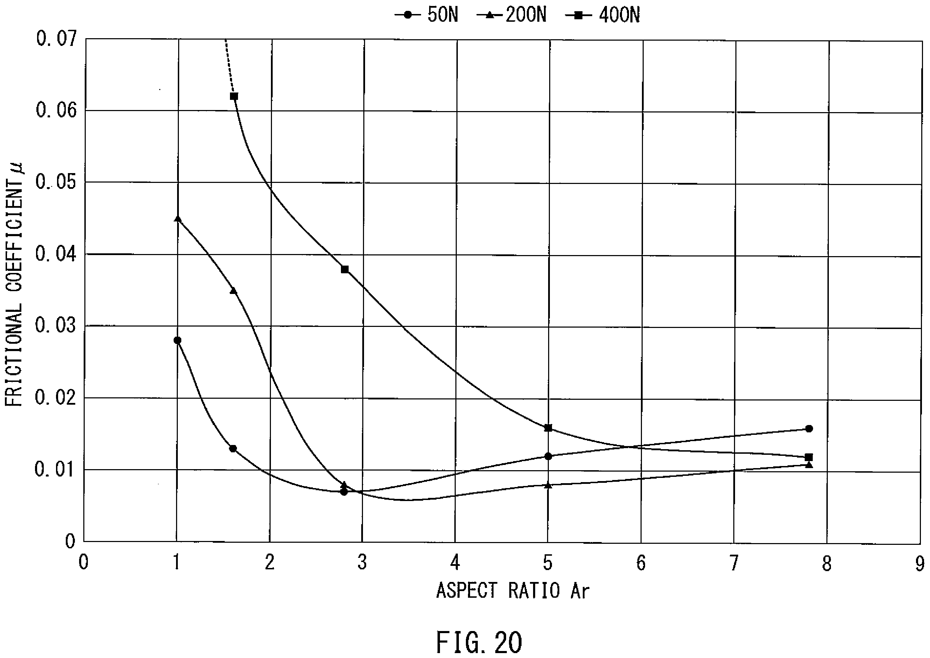

FIG. 20 shows the relationship between the aspect ratio Ar of the dimples and the frictional coefficient under a constant load, supported by the experimental results. The aspect ratio Ar was defined as the ratio of the vertical length in the longitudinal direction to the lateral length in the direction orthogonal to the longitudinal direction. As shown in FIG. 20, when the aspect ratio Ar was 1 to 3, the frictional coefficient increased at high load. When the aspect ratio Ar was 5.0 or more, the frictional coefficient was small at both high load and low load.

The load changes due to the rattle caused when two relatively sliding objects, for example, a cylindrical bearing and a columnar shaft in the bore of the bearing, slide. The frictional coefficient is reduced by forming dimples on one or both of the two objects. As shown in FIG. 20, by setting the aspect ratio Ar of the dimples to 5.0 or more, the frictional coefficient can be kept small, regardless of the change in load. Thus, the relative movement of the two objects becomes more stable.

If the aspect ratio Ar increases, while keeping the vertical length in the longitudinal direction of the dimple substantially constant, an area of the dimple reduces. In order to maintain the dimple area ratio over the entire processing surface at a certain ratio, for example, 15% of coverage or more, it is necessary to form a larger number of dimples if the aspect ratio Ar is increased. Therefore, it is preferable that the aspect ratio Ar has an upper limit of 50.0.

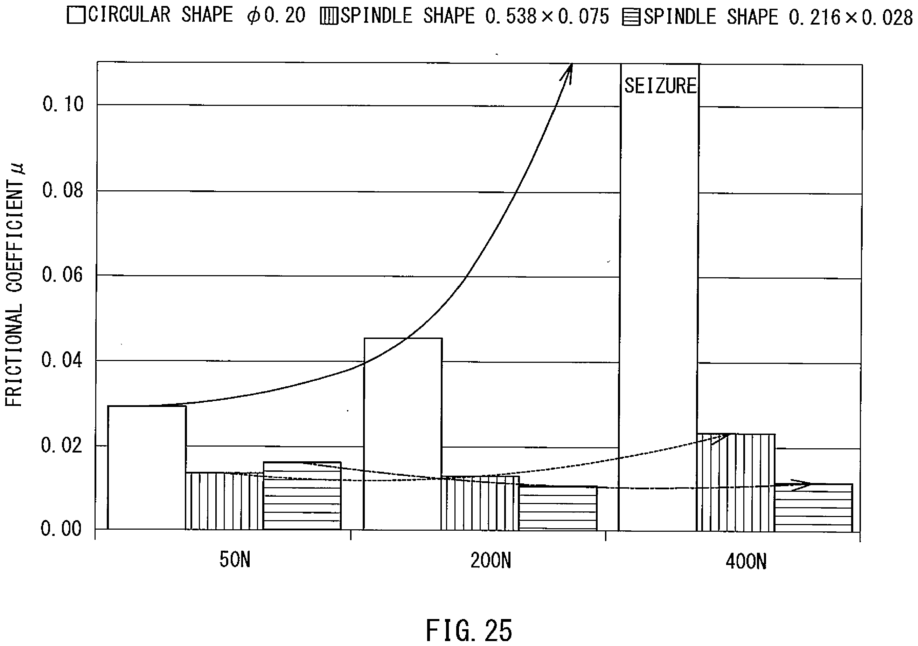

FIG. 25 shows the relationship between the load and the frictional coefficient for workpieces, such as a workpiece provided with circular dimples and two workpieces provided with spindle-shaped dimples. The spindle-shaped dimples formed on two of the workpieces had an aspect ratio of 5.0 or more. The spindle-shaped dimples of the two workpieces had different vertical lengths in the longitudinal direction. First, the frictional coefficients were compared between the spindle-shaped dimples and the circular dimples. Regardless of the level of the load, the frictional coefficient of the spindle-shaped dimples was smaller, by about 0.01 to about 0.02, than that of the circular dimples. Next, the two workpieces with spindle-shaped dimples were compared. At low to medium loads of 50 to 200 N, there was almost no difference in the frictional coefficients, even though there was a difference in the vertical lengths of the dimples in the longitudinal direction. In the workpiece with short dimples, having a vertical length of 0.216mm in the longitudinal direction, the frictional coefficient was almost the same at a high load of 400N as the low-to-medium loads. In the workpiece with long dimples, having a vertical length of 0.538mm in the longitudinal direction, the frictional coefficient at a high load of 400N was larger than the frictional coefficient at the low-to-medium loads.

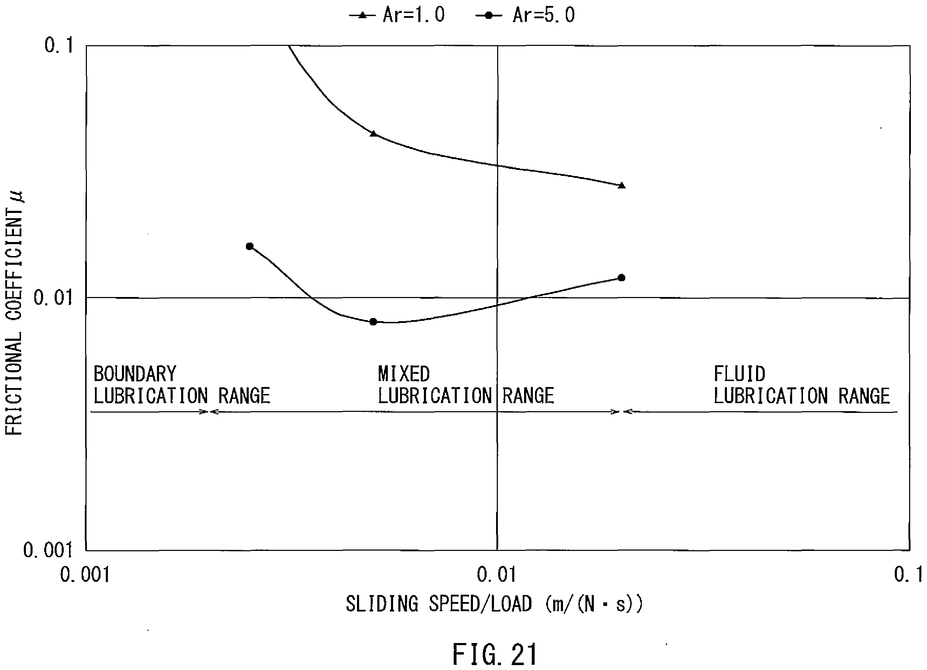

FIG. 21 is a plot of experimental results where the horizontal axis represents sliding speed/load (m/(N. s)) and the vertical axis represents the frictional coefficient. The sliding speed/load is an index of the thickness of the oil film between the workpiece and the counterpart material. The plot of the experimental results is within the mixed lubrication range. When the aspect ratio Ar was 5.0, the variation in the frictional coefficient with respect to the speed change was smaller than when the aspect ratio Ar was 1.0. For example, when the work piece slides with respect to the counterpart material at a substantially constant speed, the workpiece is generally used in the mixed lubrication range. For example, when a cylinder of a piston having a large speed change is used as a workpiece, the workpiece is used in a wide range from the mixed lubrication range to the boundary lubrication range. Even in these cases, it has been shown that a workpiece with the dimples having an aspect ratio Ar of 5.0 exhibits a small change in the frictional coefficient and exhibits a stable behavior.

Various modifications may be made to the workpieces. A rotary cutting tool with a cutting edge may have a leading end having a tapered shape, such as the leading end of the rotary cutting tool 10 shown in FIG. 1, or a substantially columnar shape, such as the leading end of the rotary cutting tool 60 shown in FIG. 16. The direction of rotation of the rotary cutting tool and the direction of movement of the workpiece may be selected appropriately. In other words, the dimple processing may be up-cut or down-cut. For example, regarding the plurality of dimples arranged in parallel in the longitudinal direction and the transverse direction, and regarding the sliding direction of the workpiece with respect to the counterpart material, the dimples may be formed such that the longitudinal direction of the dimples orthogonally intersects the sliding direction. The dimple processing method may be applied not only to a metal workpiece but also to a non-metal workpiece.

The various embodiments described above in detail with reference to the attached drawings are representative examples helping to understand the present invention. The detailed description teaches those skilled in the art to make, use, and/or practice various aspects of the present teachings and are not intended to limit the scope of the invention. Further, each additional feature and teaching described above may be applied to or used separately from and/or together with other features and teachings to provide an improved dimpled workpiece and/or a method of producing and using the same. The invention is defined by the appended claims.

## Claims

1. A dimpled workpiece comprising:
a plurality of dimples, configured to increase pressure of an oil film, formed in a workpiece, wherein:
each of the plurality of dimples has an aspect ratio of 5.0 or more and 50.0 or less, and the aspect ratio is a ratio of a vertical length of the dimple in a longitudinal direction to a lateral length of the dimple in a lateral direction orthogonal to the longitudinal direction, and
each of the plurality of dimples has a spindle shape.

2. The dimpled workpiece as defined in claim 1, wherein:
the plurality of the dimples includes a first plurality of dimples parallel to each other, and a second plurality of dimples parallel to each other, and
the first and second plurality of dimples are arranged so that the longitudinal direction of the first plurality of dimples intersects a longitudinal direction of the second plurality of dimples.

3. The dimpled workpiece as defined in claim 1 or 2, wherein:
a depth of each of the plurality of dimples is 10.0µm or less, and
end edges of each of the plurality of dimples in the longitudinal direction have an inclination angle of 10° or less with respect to the surface of the workpiece in a depth direction.

4. A dimple processing method for forming dimples in a workpiece according to claim 1 using a rotary cutting tool, comprising the steps of:
rotating a rotary cutting tool about an axis, the rotary cutting tool comprising:
a tool main body supported rotatably about the axis; and
a cutting edge provided on an outer circumference of the tool main body in a direction intersecting a direction in which the axis extends; and
feeding the rotary cutting tool along a processing surface so as to form dimples in the processing surface using the cutting edge, wherein:
each of the dimples has an aspect ratio of 5.0 or more and 50.0 or less,
the aspect ratio is a ratio of a vertical length in the longitudinal direction to the lateral length in a lateral direction, and
each of the plurality of dimples has a spindle shape.

## Patentansprüche

1. Werkstück mit Vertiefungen, das Folgendes umfasst:
eine Vielzahl von in einem Werkstück gebildeten Vertiefungen, die dazu ausgebildet sind, den Druck eines Ölfilms zu erhöhen, wobei:
jede der Vielzahl von Vertiefungen ein Seitenverhältnis von 5,0 oder mehr und 50,0 oder weniger hat, und wobei das Seitenverhältnis ein Verhältnis einer vertikalen Länge der Vertiefung in Längsrichtung zu einer lateralen Länge der Vertiefung in einer lateralen Richtung orthogonal zu der Längsrichtung ist, und
jede der Vielzahl von Vertiefungen spindelförmig ist.

2. Werkstück mit Vertiefungen nach Anspruch 1, wobei:
die Vielzahl von Vertiefungen eine erste Vielzahl von Vertiefungen umfasst, die zueinander parallel sind, und eine zweite Vielzahl von Vertiefungen, die zueinander parallel sind, und
die erste und die zweite Vielzahl von Vertiefungen so angeordnet sind, dass die Längsrichtung der ersten Vielzahl von Vertiefungen eine Längsrichtung der zweiten Vielzahl von Vertiefungen schneidet.

3. Werkstück mit Vertiefungen nach Anspruch 1 oder 2, wobei:
eine Tiefe einer jeden der Vielzahl von Vertiefungen 10,0 µm oder weniger beträgt, und
Endkanten einer jeden der Vielzahl von Vertiefungen in Längsrichtung einen Neigungswinkel von 10° oder weniger zu der Oberfläche des Werkstücks in Tiefenrichtung haben.

4. Vertiefungsbearbeitungsverfahren zur Bildung von Vertiefungen in einem Werkstück nach Anspruch 1 mit Hilfe eines rotierenden Schneidwerkzeugs, mit den folgenden Schritten:
Drehen eines rotierenden Schneidwerkzeugs um eine Achse, wobei das rotierende Schneidwerkzeug Folgendes umfasst:
einen Werkzeughauptkörper, der um die Achse drehbar gelagert ist; und
eine Schneidkante, die an einem Außenumfang des Werkzeughauptkörpers in einer Richtung vorgesehen ist, die eine Richtung schneidet, in der sich die Achse erstreckt; und
Vorschieben des rotierenden Schneidwerkzeugs entlang einer Bearbeitungsfläche, um mit Hilfe der Schneidkante Vertiefungen in der Bearbeitungsfläche zu bilden, wobei:
jede der Vertiefungen ein Seitenverhältnis von 5,0 oder mehr und 50,0 oder weniger hat,
das Seitenverhältnis ein Verhältnis einer vertikalen Länge in Längsrichtung zu der lateralen Länge in einer lateralen Richtung ist, und
jede der Vielzahl von Vertiefungen spindelförmig ist.

## Revendications

1. Pièce à usiner à fossettes comportant:
une pluralité de fossettes, configurées pour augmenter la pression d'un film d'huile, formées dans une pièce à usiner, dans laquelle :
chacune de la pluralité de fossettes présente un rapport d'aspect de 5,0 ou plus et de 50,0 ou moins, et le rapport d'aspect est un rapport entre la longueur verticale de la fossette dans une direction longitudinale et la longueur latérale de la fossette dans une direction latérale orthogonale à la direction longitudinale, et
chacune de la pluralité de fossettes possède une forme de fuseau.

2. Pièce à usiner à fossettes selon la revendication 1, dans laquelle:
la pluralité de fossettes comprend une première pluralité de fossettes parallèles les unes aux autres et une deuxième pluralité de fossettes parallèles les unes aux autres, et
la première et la deuxième pluralité de fossettes sont agencées de telle sorte que la direction longitudinale de la première pluralité de fossettes croise la direction longitudinale de la deuxième pluralité de fossettes.

3. Pièce à usiner à fossettes selon la revendication 1 ou 2, dans laquelle:
une profondeur de chacune de la pluralité de fossettes est inférieure ou égale à 10,0 µm ou moins, et
les bords d'extrémité de chacune de la pluralité de fossettes dans la direction longitudinale présentent un angle d'inclinaison de 10° ou moins par rapport à la surface de la pièce à usiner dans une direction de profondeur.

4. Procédé de traitement de fossettes pour former des fossettes dans une pièce à usiner selon la revendication 1 à l'aide d'un outil de coupe rotatif, comportant les étapes suivantes:
faire tourner un outil de coupe rotatif autour d'un axe, l'outil de coupe rotatif comportant:
un corps principal de l'outil supporté de manière rotative autour de l'axe; et
une arête de coupe prévue sur la circonférence extérieure du corps principal de l'outil, dans une direction croisant une direction dans laquelle s'étend l'axe ; et
faire avancer l'outil de coupe rotatif le long d'une surface de traitement de manière à former des fossettes dans la surface de traitement à l'aide de l'arête de coupe, dans lequel:
chacune des fossettes présente un rapport d'aspect de 5,0 ou plus et de 50,0 ou moins,
le rapport d'aspect est un rapport entre une longueur verticale dans la direction longitudinale et la longueur latérale dans une direction latérale, et
chacune de la pluralité de fossettes possède une forme de fuseau.
